# EUROPEAN PATENT SPECIFICATION

(11) **EP 3 985 378 B1**
(45) Date of publication and mention of the grant of the patent: **25.06.2025**
(21) Application number: 20821992.3
(22) Date of filing: 20.05.2020
(51) Int. Cl.: G01N 1/28

(54) **OBSERVATION SAMPLE COVERING IMPLEMENT, COVERING IMPLEMENT PACKAGE, AND METHOD FOR COVERING OBSERVATION SAMPLE**
VORRICHTUNG ZUR ABDECKUNG EINER BEOBACHTUNGSPROBE, GEHÄUSE FÜR EINE ABDECKUNG UND VERFAHREN ZUR ABDECKUNG EINER BEOBACHTUNGSPROBE
OUTIL DE RECOUVREMENT D'ÉCHANTILLON D'OBSERVATION, CONDITIONNEMENT D'INSTRUMENT DE RECOUVREMENT ET PROCÉDÉ DE RECOUVREMENT D'ÉCHANTILLON D'OBSERVATION

(30) Priority: 12.06.2019 JP 2019109896
(43) Date of publication of application: 20.04.2022
(73) Proprietor: TOKAI UNIVERSITY EDUCATIONAL SYSTEM, Tokyo 151-0063 (JP)
(72) Inventor: OKAMURA, Yosuke, Hiratsuka-shi Kanagawa 259-1292 (JP); ZHANG, Hong, Hiratsuka-shi Kanagawa 259-1292 (JP); KITA, Rio, Hiratsuka-shi Kanagawa 259-1292 (JP); KIMURA, Hiroshi, Hiratsuka-shi Kanagawa 259-1292 (JP)
(74) Representative: Dehns
(86) International application number: PCT/JP2020/019873
(87) International publication number: WO 2020/250633

(56) References cited:
- JP-A- 2017 164 930
- KR-A- 20050 008 238
- HONG ZHANG ET AL: "Porous nanosheet wrapping for live imaging of suspension cells", JOURNAL OF MATERIALS CHEMISTRY. B, vol. 6, no. 41, 1 January 2018 (2018-01-01), GB, pages 6622 - 6628, XP055771270, ISSN: 2050-750X, DOI: 10.1039/C8TB01943F
- HONG ZHANG ET AL: "Fluoropolymer Nanosheet as a Wrapping Mount for High-Quality Tissue Imaging", ADVANCED MATERIALS, VCH PUBLISHERS, DE, vol. 29, no. 37, 11 August 2017 (2017-08-11), pages n/a, XP071871877, ISSN: 0935-9648, DOI: 10.1002/ADMA.201703139
- ZHANG, HONG ET AL.: "Porous nanosheet wrapping for live imaging of suspension cells", J. MATER. CHEM. B, vol. 6, no. 41, 7 November 2018 (2018-11-07), pages 6622 - 6628, XP055771270
- ZHANG, HONG ET AL.: "Fluoropolymer Nanosheet as a Wrapping Mount for High- Quality Tissue Imaging", ADV. MATER., vol. 29, no. 1703139, 11 August 2017 (2017-08-11), pages 1 - 6, XP055771274

## Description

### TECHNICAL FIELD

The present invention relates to an observation sample covering implement, a covering implement package, and a method for covering an observation sample.

### BACKGROUND ART

Microscopic imaging technology is constantly evolving, and it is an indispensable observation method to visualize biological phenomena in a live manner and obtain information as it really is. The development of the tangible side (microscopes themselves and observation accuracy) has been remarkable, as indicated by the development of two-photon excitation microscopes, total internal reflection fluorescence microscopes, and super-resolution microscopes, for example. In addition, the recent development of reagents that make organs and other biological tissues transparent (Non-Patent Literatures 1 and 2) has enabled deep imaging of specific proteins in biological tissues, and there has been a rapid increase in the need for imaging of entire biological tissues, which was previously impossible.

Here, for ease of explanation, the observation sample and the observation specimen will be defined first. An observation sample is defined as a cell, biological tissue, or the like, or a cell, biological tissue, or the like placed on an observation substrate or holding material, and an observation specimen is defined as the observation sample covered with an ultra-thin film.

On the other hand, for the preparation of an observation sample (intangible side), in the conventional technique, cells or biological tissues to be observed are made transparent with a transparency reagent (Non-Patent Literatures 1 and 2), and the biological tissues are placed on a cover glass (observation substrate). However, this observation sample does not prevent the cells or biological tissue from drying out, and the force of inertia causes the image to blur, making it difficult to observe for a long time or to obtain a high-resolution image. The problematic drying in the conventional art can be avoided by wrapping the cells and biological tissues with hydrogel, but the transparent cells and biological tissues will return to their original opaque state. In view of this, a method has been developed in which cells or biological tissues to be observed are placed on a cover glass (observation substrate) and then covered with an ultra-thin film (observation specimen). Thus, it is possible to maintain transparency and observe for a long time. In this observation sample, microscopic observation is performed from the cover glass (observation substrate) side, and in addition, a method has been proposed in which an ultra-thin film is used as the observation substrate, cells and biological tissue are covered with the ultra-thin film, and microscopic observation is performed from the ultra-thin film side. This method makes it possible to observe cells and biological tissues at greater depths during microscopic observation, because it does not interfere with the optical performance of the microscope as cover glass does (Non-Patent Literature 3). Thus, there is a demand for ultra-thin film covering for imaging by microscope. However, before covering, the ultra-thin film is immersed in an aqueous solvent. Therefore, when the ultra-thin film is removed from the aqueous solvent into the air with tweezers or the like, it is difficult to remove it in a flat state due to twisting or the like of the ultra-thin film. As a result, there is a problem that it is very difficult to cover the entire target cell or biological tissue with the ultra-thin film.

To solve this problem, a method has been proposed in which a nonwoven fabric is used as a substrate and has an ultra-thin film on it, and the ultra-thin film side of the nonwoven fabric is stuck to the covered body, and the ultra-thin film is transferred to the covered body by rubbing the nonwoven fabric with the ball of the finger. (Patent Literature 1)

In addition, an ultra-thin film is floated in an aqueous solvent, biological tissue is placed on that ultra-thin film, and then a cover glass (observation substrate) is placed on top thereof, and the biological tissue and cover glass (observation substrate) are covered with the ultra-thin film (Non-Patent Literature 4).

KR 2005 0008238 A discloses a window slide substrate comprising a slide substrate body and a detachable window lid.

*"*Porous nanosheet wrapping for live imaging of suspension cells" by Zhang et al. discloses a porous nanosheet wrapping method to noninvasively immobilise suspension cells for their live imaging.

### CITATION LIST

### Non-Patent Literature

Non-Patent Literature 1: H. Hama, et al., Nat. Neurosci., 14, 1481 (2011)
Non-Patent Literature 2: H. Hama, et al., Nat. Neurosci., 18, 1518 (2015)
Non-Patent Literature 3: Preparation of Water-Repellent Ultra-Thin Films and Establishment of Cover Glass-Free In Vivo Deep Imaging Method, the 8th CSJ Chemistry Festa 2018, Student Poster Presentation, Field: 2. Inorganic and Analytical Chemistry, Presentation Number: P2-072, held on October 23, 2018.
Non-Patent Literature 4: Y. Okamura, et al., Adv. Mater., 29, 1703139 (2017)

### Patent Literature

Patent Literature 1: Japanese Patent Application Publication No. 2017-164930

### SUMMARY OF INVENTION

### Technical Problem

However, with the method of transferring the ultra-thin film described in Patent Literature 1, it is possible to transfer to the surface of the observation sample, but it is difficult to create an observation specimen by wrapping as far as the back of the observation sample with the ultra-thin film. In addition, since it is necessary to rub the nonwoven fabric side in order to transfer the ultra-thin film, there is a possibility that cells or biological tissues may be crushed, or cells or biological tissues may be displaced from the predetermined position of the cover glass (observation substrate), which may affect by pressure the cells or biological tissues to be observed.

In addition, the method of preparing an observation specimen described in Non-Patent Literature 4 is complicated and requires skillful work. In addition, before the biological tissue and cover glass (observation substrate) are covered with the ultra-thin film, more aqueous solvent than necessary may enter between the cover glass (observation substrate) and the ultra-thin film, affecting the environment of the cells and biological tissues to be observed. Furthermore, if the biological tissue is heavy, the downward deformation of the ultra-thin film may be so large that the biological tissue falls into the aqueous solvent and the observation specimen cannot be prepared.

In addition, researchers who observe cells and biological tissues need to obtain ultra-thin films in order to manufacture such observation specimens, but there is a problem that the only way to transport ultra-thin films is to provide films with substrates and sacrificial layers used for manufacturing ultra-thin films, or to provide an entire solvent with ultra-thin films floating in the solvent, other than providing nonwoven fabrics with ultra-thin films stuck as described above, which makes it extremely difficult to transport and distribute ultra-thin films.

The present invention has been made in view of the above circumstances, and an object thereof is to provide an observation sample covering implement, a covering implement package, and a method for covering an observation sample that provide easy workability in the preparation of observation specimens.

### Solution to Problem

To solve the above problem, an observation sample covering implement according to the present invention includes: an ultra-thin film that covers an observation sample disposed on an observation substrate; and a main body section that has a holding section with an opening section formed therein, in which the ultra-thin film is formed larger than the opening section, and the ultra-thin film sticks by physical adsorption to at least an upper surface and part of a side surface of the holding section so as to block the opening section, and is held on the holding section; wherein the ultra-thin film is configured to cover a top surface and peripheral side surfaces of the observation sample; wherein the thickness of the ultra-thin film ranges from 20nm to 200nm; and the ultra-thin film is made of a hydrophobic resin; and wherein the main body section includes: a plate section in which the holding section is composed of a plate material and a through hole is formed in the plate material to form the opening section, and a wall section which extends downward from an outer periphery of the plate section.

According to this configuration, the ultra-thin film, from which the sacrificial layer and substrate have been removed, can be used immediately. In addition, since the ultra-thin film is stuck and held by physical adsorption to the holding section, the observation sample can be easily covered without causing twisting or the like of the ultra-thin film in the preparation of the observation specimen.

According to this configuration, the ultra-thin film floating in the solvent is scooped up by the main body section and supported by the wall section when it is taken out, so that the work of scooping up the ultra-thin film becomes easy.

Preferably, in the observation sample covering implement according to the present invention, the main body section includes a frame section in which the holding section is composed of a wire rod, and the wire rod is positioned in a frame shape to form the opening section, and a handle section connected to the frame section.

According to this configuration, the ultra-thin film floating in the solvent is scooped up by the main body section, and by holding the handle section when taking out, so that the work of scooping up the ultra-thin film becomes easy.

Preferably, in the observation sample covering implement according to the present invention, the holding section includes a stepped section that forms a recess on an upper surface side where the ultra-thin film is held, and the stepped section is formed on an outer peripheral side of the holding section outside the opening section, and the opening section is opened to a bottom surface of the recess.

According to this configuration, since the holding section has a stepped section, even when the observation sample covering implement is placed on a work table or the like in the preparation of an observation specimen, it can stand on its own, and the ultra-thin film in the area covering the observation sample will not stick to the work table or the like.

Preferably, in the observation sample covering implement according to the present invention, the main body section is made of metal, glass, or resin, and the main body section is insoluble in one solvent selected from the group consisting of aqueous solvents and organic solvents.

According to this configuration, when the ultra-thin film floating in the solvent is scooped up by the main body section, the main body section will not dissolve in the solvent to deform or disappear.

Preferably, the observation sample covering implement according to the present invention further includes at least one of a lid section that covers an upper surface side and a receiving section that covers a lower surface side of the holding section.

According to this configuration, at least one of the lid section and the receiving section covers at least one of the upper surface and the lower surface of the ultra-thin film, so that dust, dirt, or the like will not adhere to the ultra-thin film.

Preferably, in the observation sample covering implement according to the present invention, the opening section is formed larger than the observation sample.

According to this configuration, in the preparation of an observation specimen, the observation sample covering implement can be easily moved to the lower side of the observation sample, so that even the lower surface of the observation sample can be covered with an ultra-thin film.

A covering implement package according to the present invention includes: the above-described observation sample covering implement; and a packaging bag that wraps the observation sample covering implement from an outside.

According to this configuration, since the packaging bag covers the observation sample covering implement, tears and the like in the ultra-thin film during transportation can be prevented. In addition, if a sterilization bag is used as the packaging bag to wrap the sterilized observation sample covering implement, a sterilized observation sample covering implement can be provided. Furthermore, if at least one side of the sterilization bag is made of a material that transmits ultraviolet rays, the observation sample covering implement can be sterilized by irradiating ultraviolet rays after it is wrapped in the sterilization bag.

A method for covering an observation sample according to the present invention includes: preparing the above-described observation sample covering implement and an observation sample; and covering the observation sample with the ultra-thin film by placing the observation sample covering implement above the observation sample.

This method eliminates the step of using a solvent to remove the sacrificial layer and substrate from the ultra-thin film and facilitates the covering of the observation sample.

### Advantageous Effects of Invention

The observation sample covering implement, the covering implement package, and the method for covering an observation sample according to the present invention provides easy workability in the preparation of an observation specimen.

### BRIEF DESCRIPTION OF DRAWINGS

FIG. 1A is a perspective view illustrating the configuration of an observation sample covering implement.
FIG. 1B is a cross-sectional view taken along the line IB-IB of FIG. 1A.
FIG. 2 is a cross-sectional view of an observation sample covering implement provided with a lid material.
FIG. 3 is a cross-sectional view illustrating the configuration of a covering implement package.
FIG. 4 is a flowchart illustrating the steps of a method for manufacturing an observation sample covering implement.
FIG. 5A is a perspective view schematically illustrating a prepared substrate in a substrate preparation step of a method for manufacturing an observation sample covering implement.
FIG. 5B is a perspective view schematically illustrating a substrate in which a sacrificial layer is formed in a sacrificial layer formation step of a method for manufacturing an observation sample covering implement.
FIG. 5C is a perspective view schematically illustrating a substrate in which an ultra-thin film is formed on the sacrificial layer in an ultra-thin film formation step of a method for manufacturing an observation sample covering implement.
FIG. 5D is a perspective view schematically illustrating an ultra-thin film immersed in a solvent in an ultra-thin film immersion step of a method for manufacturing an observation sample covering implement.
FIG. 5E is a partially cutaway perspective view schematically illustrating a state in which an ultra-thin film immersed in a solvent is scooped up by a main body section in an ultra-thin film takeout step of a method for manufacturing an observation sample covering implement.
FIG. 6 is a flowchart illustrating the steps of a method for covering an observation sample.
FIG. 7A is a cross-sectional view schematically illustrating a prepared covering implement and observation sample in the preparation step of the method for covering an observation sample.
FIG. 7B is a cross-sectional view schematically illustrating an observation sample covered with an ultra-thin film in the covering step of the method for covering an observation sample.
FIG. 8A is a cross-sectional view schematically illustrating other embodiments of a prepared covering implement and observation sample in the preparation step of the method for covering an observation sample.
FIG. 8B is a cross-sectional view schematically illustrating other embodiments of an observation sample covered with an ultra-thin film in the covering step of the method for covering an observation sample.
FIG. 9 is a cross-sectional view schematically illustrating other embodiments of a prepared covering implement and observation sample in the preparation step of the method for covering an observation sample.
FIG. 10 is a cross-sectional view schematically illustrating other embodiments of a prepared covering implement and observation sample in the preparation step of the method for covering an observation sample.
FIG. 11 is a perspective view illustrating the configuration of another embodiment of an observation sample covering implement.
FIG. 12A is a perspective view illustrating the configuration of another embodiment of an observation sample covering implement.
FIG. 12B is a cross-sectional view taken along the line XIIB-XIIB of FIG. 12A.
FIG. 13 is a cross-sectional view illustrating the configuration of another embodiment of an observation sample covering implement provided with a lid material.
FIG. 14A is a perspective view illustrating the configuration of another embodiment of an observation sample covering implement.
FIG. 14B is a cross-sectional view taken along the line XIVB-XIVB of FIG. 14A.
FIG. 15 is a perspective view illustrating the configuration of another embodiment of an observation sample covering implement.

### DESCRIPTION OF EMBODIMENTS

A first embodiment of the present invention will be described with reference to the drawings.

### <Observation Sample Covering Implement>

First, an observation sample covering implement (hereinafter referred to as the covering implement) according to the present invention will be described.

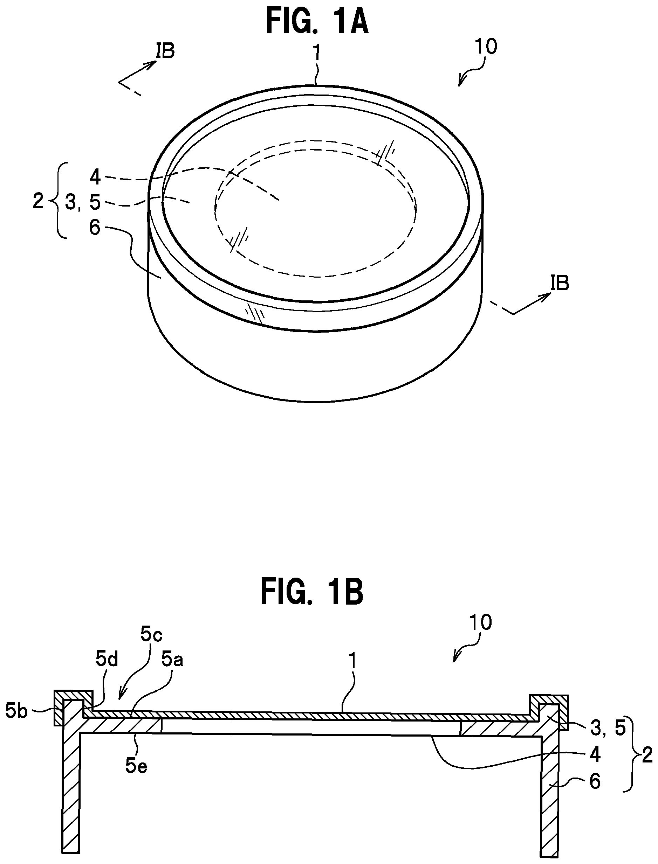

As illustrated in FIGs. 1A and 1B, the covering implement 10 according to the present invention includes an ultra-thin film 1 and a main body section 2. Hereinafter, each configuration will be explained.

### (Ultra-Thin Film)

The ultra-thin film 1 is used to cover an observation sample. Here, the observation sample means cells or biological tissues, or cells or biological tissues placed on the observation substrate or holding material. Note that depending on the observation conditions, reagents, culture media, and the like necessary for observation may be included together with the cells or biological tissue. In addition, the observation substrate here means the one located on the side to be irradiated with light a microscope or the like.

The cells include eukaryotic cells such as animal cells and plant cells, as well as prokaryotic cells such as bacteria and archaea. Any cells collected from living organisms include, for example, cells derived from skin, muscle, bone, adipose tissue, cranial nervous system, sensory system, circulatory systems such as heart and blood vessels, lungs, liver, spleen, pancreas, kidneys, digestive system, thymus, lymph, and the like, and cultures thereof. The cells may include body fluids such as blood (such as whole blood, serum, and plasma), lymph fluid, saliva, urine, ascites, sputum, and the like.

The biological tissues include any tissues collected from living organisms, such as skin, muscle, bone, adipose tissue, cranial nervous system, sensory system, circulatory systems such as heart and blood vessels, lungs, liver, spleen, pancreas, kidneys, digestive system, thymus, lymph, and the like, and cultures thereof. The biological tissues may include body fluids such as blood (such as whole blood, serum, and plasma), lymph fluid, saliva, urine, ascites, sputum, and the like. Of these, biological tissues of cranial nervous system, sensory system, circulatory system, bone, muscle, and the like are preferable, which are often used for fluorescence imaging using fluorescent dyes or the like. Plastics, cover glasses, glass slides, and the like are often used as the observation substrate. Note that the materials are not limited to the above as long as they can be used for observation. In addition, when the ultra-thin film 1 to be covered is used as the observation substrate and the cells or biological tissues are small, a holding material is used. The holding material is often plastic, cover glass, glass slide, or the like. Note that the materials are not limited to the above as long as they can hold cells or biological tissues.

Note that the observation sample can be not only cells or biological tissues, but also microparticles/nanoparticles that are not derived from living organisms, or microparticles/nanoparticles that are placed on an observation substrate or holding material. The microparticles/nanoparticles include polymer particles, liposomes, polymersomes, droplets, metal colloids, and the like. In addition, as long as the particle diameter of the microparticles/nanoparticles is 1 nm or more and 1 mm or less, the material is not particularly limited.

The ultra-thin film 1 sticks by physical adsorption to at least the upper surface 5a and part of the side surface 5b of the holding section 3 (plate section 5) so as to block the opening section 4, and is held on the plate section 5. In addition, the shape of the ultra-thin film 1 can be, for example, square, rectangular, circular, or elliptical in a plan view. Note that with regard to the ultra-thin film 1, the shape of the ultra-thin film 1 is not limited as long as it is formed larger than the opening section 4. The size of the ultra-thin film 1 is preferably such that size of the ultra-thin film 1 in a plan view is larger than the outer diameter of the plate section 5 and smaller than the size of the container section containing the solvent for immersing the ultra-thin film 1 to dissolve the substrate and sacrificial layer of the ultra-thin film 1.

The ultra-thin film 1 is a self-supporting (which does not require the support of an observation substrate) thin film whose thickness is controlled to the nano-order, and exhibits a high adhesiveness specific to nano-thickness and can be attached to various interfaces (such as glass, plastic, and biological tissue) only by physical adsorption such as van der Waals force and electrostatic interaction without using reactive functional groups or adhesives.

The film thickness of the ultra-thin film 1 is 20 nm or more, preferably 30 nm or more, and more preferably 40 nm or more, while it is 200 nm or less, preferably 180 nm or less, and more preferably 150 nm or less. A film thickness of 20 nm or more facilitates handling of the ultra-thin film 1, while a film thickness of 200 nm or less provides good adhesiveness of the ultra-thin film 1.

It is preferable that the resin contained in the ultra-thin film 1 is insoluble in the culture medium and buffer solution used when observing biological tissues, and insoluble in the solvent used to dissolve the sacrificial layer in the manufacture of the ultra-thin film 1. In addition, it is preferable that the resin does not affect the biological tissues, for example, it is not a resin that gives a biological stimulus or a resin that is toxic to biological tissues.

With regard to the ultra-thin film 1, when the ultra-thin film 1 is used as an observation substrate, the light used in microscopy is visible light (400 nm or more), and ultra-thin films with a film thickness of 200 nm or less, which are equal to or less than half the thickness of that wavelength, may be made of resin with a refractive index that does not affect the optical system and does not interfere with microscopes or other optical systems.

The resin is a water-repellent resin. This serves the purpose to prevent drying of cells and biological tissues and to inhibit their migration. Water repellency can be evaluated by water contact angle, which can be measured using, for example, a contact angle meter or the like. The water contact angle is preferably 90 degrees or more, more preferably 95 degrees or more, and further preferably 100 degrees or more, while it is preferably 130 degrees or less, more preferably 125 degrees or less, and further preferably 120 degrees or less. The water-repellent resin is, for example, perfluoro (1-butenyl vinyl ether) polymer, and the product is CYTOP (registered trademark) manufactured by AGC Inc. Note that the resin is not limited to a water-repellent resin as long as it is a material that can be formed as an ultra-thin film 1, and the material can be selected according to the purpose of the observation target, the data to be observed, and the like.

### (Main Body Section)

The main body section 2 includes a holding section 3 with an opening section 4 formed therein. In addition, it is preferable that the main body section 2 includes a plate section 5 in which the holding section 3 is composed of a plate material and a through hole is formed in the plate material to form the opening section 4, and a wall section 6 that is provided by extending downward from the outer periphery section of the plate section 5. The plate section 5 holds the ultra-thin film 1 at its upper surface 5a and side surface 5b.

The shape of the plate section 5 (holding section 3) is not particularly limited as long as it can hold the ultra-thin film 1, but a circular or elliptical shape in a plan view is preferable. The outer diameter and thickness of the plate material that constitute the plate section 5 are not particularly limited either, as long as they can hold the ultra-thin film 1. For example, the outer diameter: 10 mm or more and 100 mm or less, and the thickness: 0.1 mm or more and 5 mm or less.

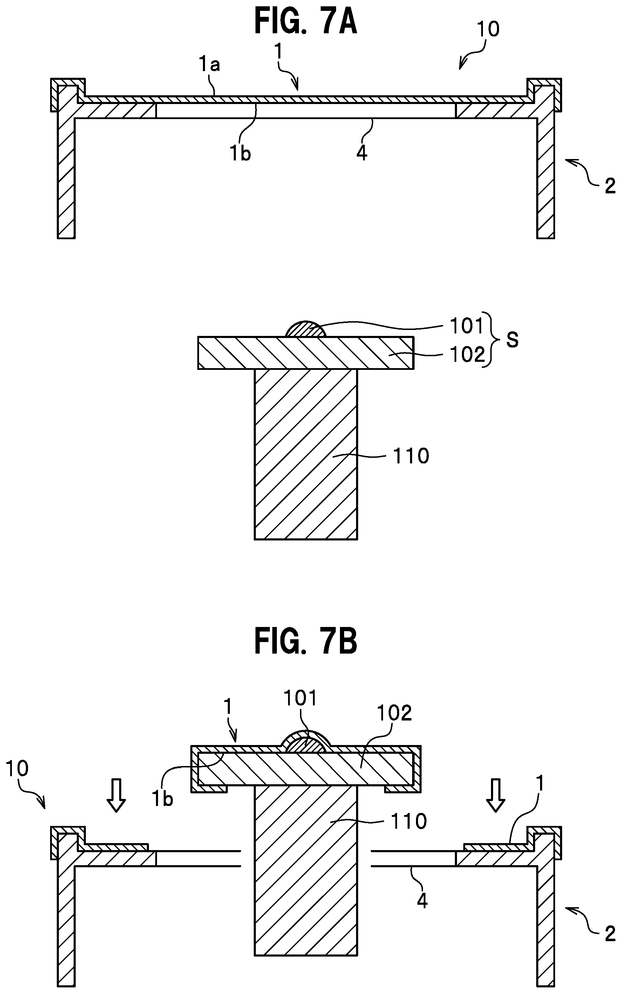

The shape of the through hole (opening section 4) formed in the plate section 5 (holding section 3) is not particularly limited, and is preferably circular or elliptical in a plan view. The outer diameter of the through hole (opening section 4) is not particularly limited, as long as the ultra-thin film 1 can be cut to a size that sufficiently covers the observation sample S by moving the covering implement 10 below the observation sample S when the observation sample S is covered with the ultra-thin film 1 (see FIG. 7B), but an example is 10 mm or more and 100 mm or less.

The wall section 6 is preferably provided by extending downward from the entire outer periphery section of the plate section 5, but it may also be provided by extending downward from part of the outer periphery. In addition, the wall section 6 is preferably provided vertically extending downward from the plate section 5, but it may also be inclined outward at a predetermined angle from the plate section 5, and the shape of the wall section 6 is not particularly limited as long as it can support the ultra-thin film 1 floating in the solvent when it is scooped up and taken out by the main body section 2. The length (height) and thickness of the wall section 6 are not particularly limited either as long as the main body section 2 can stand on its own. For example, the length (height): 1 mm or more and 20 mm or less, and the thickness: 0.3 mm or more and 3 mm or less.

It is preferable that the plate section 5 includes a stepped section 5d that forms a recess 5c on the upper surface 5a side where the ultra-thin film 1 is held, and the stepped section 5d is formed on the outer peripheral side of the plate section 5 outside the opening section 4, and the opening section 4 is opened to the bottom surface of the recess 5c. The stepped section 5d is preferably formed along the entire outer periphery of the plate section 5, but may be formed along part of the outer periphery. With regard to the forming position of the stepped section 5d, it is preferably formed at the outer edge section forming the outer periphery of the plate section 5 (side surface 5b), but it may be formed at a predetermined interval on the opening section 4 side from the side surface 5b. The height of the stepped section 5d is 0.1 mm or more and 5 mm or less, which can create a gap between the ultra-thin film 1 and the work table and prevent the ultra-thin film 1 from sticking to the work table when the covering implement 10 is placed on the work table or the like in the preparation of an observation specimen.

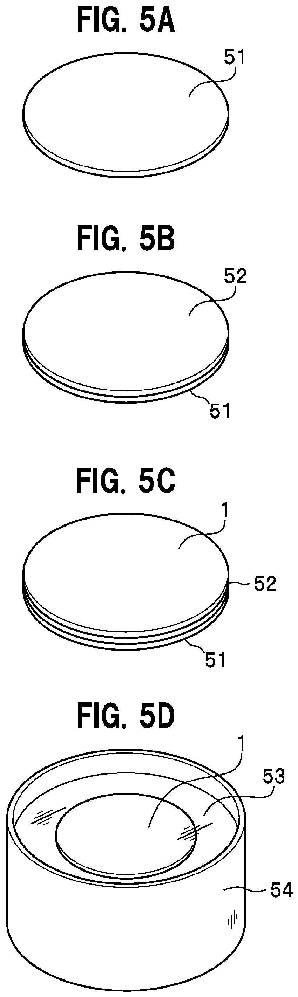

The material of the main body section 2 is not particularly limited as long as it does not change the properties of the ultra-thin film 1 held on it, but preferably, it is insoluble in one solvent 53 (see FIG. 5D) selected from the group consisting of aqueous solvents and organic solvents used in the ultra-thin film immersion step S14 described later, and is made of metal, glass, or resin. The metals include aluminum, iron, copper, brass, stainless steel, and the like, and the resins include, for example, PS, PC, PET, COP, PMMA, PEEK, PDMS, and the like. The material of the main body section 2 is further preferably resin.

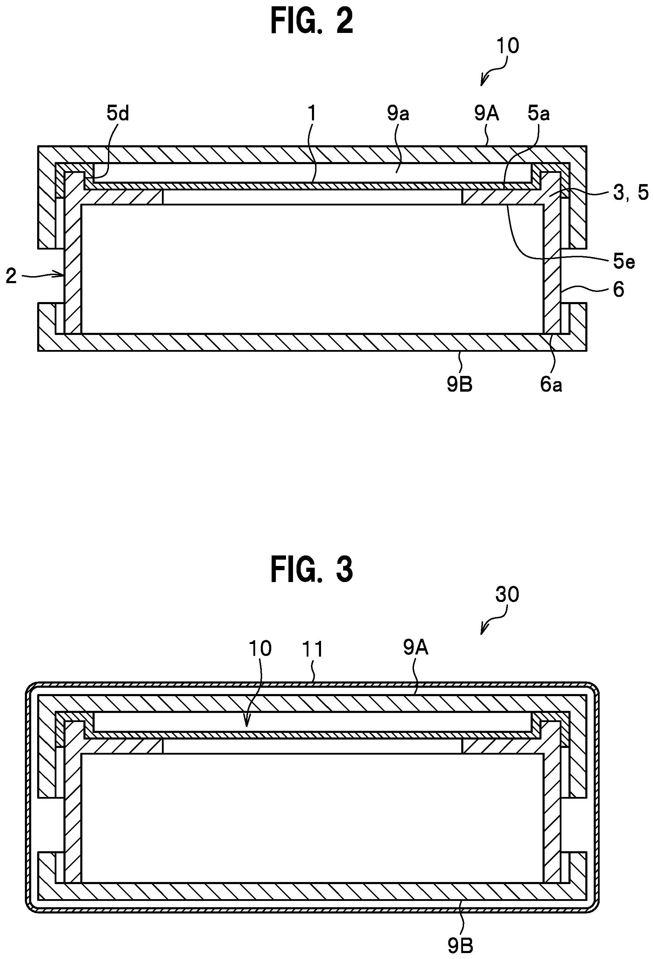

As illustrated in FIG. 2, it is preferable that the covering implement 10 further includes at least one of the lid section 9A that covers the upper surface 5a side and the receiving section 9B that covers the lower surface 5e side of the holding section 3 (plate section 5).

The shapes of the lid section 9A and the receiving section 9B are not particularly limited as long as they can cover the upper surface 5a side of the plate section 5 or the lower surface 5e side of the plate section 5, that is, the lower surface 6a of the wall section 6, but a circular or elliptical shape similar to the plate section 5 in a plan view is preferable. The lid section 9A and the receiving section 9B cover the covering implement 10 so as to sandwich it from above and below, and the lid section 9A and the receiving section 9B may have the same shape or different heights at the side surfaces. The material of the lid section 9A and the receiving section 9B is not particularly limited, but the same material as the plate section 5 or the wall section 6 is preferable.

Since the thickness of the ultra-thin film 1 is on the order of nanometers, it has the property of easily sticking to anything. Therefore, it is difficult to remove dust or dirt once it sticks to the ultra-thin film 1, and the ultra-thin film 1 becomes an unsuitable film for observation of biological tissues and the like. If the covering implement 10 according to the present invention includes the lid section 9 and the receiving section 9B, they can prevent dust, dirt, and the like from sticking to the ultra-thin film 1 held on the plate section 5, and can hold the ultra-thin film 1 suitable for observation of biological tissues and the like.

The lid section 9A, which covers the upper surface 5a side of the plate section 5, is preferably in a form where a gap 9a is formed between it and the ultra-thin film 1 so that the ultra-thin film 1 does not stick to the inner surface of the lid section 9A. To form such a gap 9a, it is preferable to form a stepped section 5d on the plate section 5. Note that a convex (not shown) may be formed on the inner surface of the lid section 9A that is on the ultra-thin film 1 side.

### <Covering Implement Package>

Next, the covering implement package according to the present invention will be described.

As illustrated in FIG. 3, the covering implement package 30 includes a covering implement 10 and a packaging bag 11 that wraps the covering implement 10 from the outside. Since the configuration of the covering implement 10 is the same as described above, the description thereof is omitted.

As the packaging bag 11, it is possible to use, for example, a conventional known packaging bag such as peel wrapping, which is a resin film, or a sterilization bag. Note that as long as the covering implement 10 can be wrapped, the covering implement 10 may be wrapped with a single sheet-shaped, if not bag-shaped, covering implement package, and the shape is not particularly limited. If the covering implement package 30 includes the packaging bag 11 that wraps the covering implement 10 from the outside, it is possible to prevent the lid section 9A from coming off during transportation and causing tears or other damage to the ultra-thin film 1. In addition, when a sterilized bag is used as the packaging bag to wrap the sterilized covering implement 10, the sterilized covering implement 10 can be provided. Furthermore, if at least one side of the sterilization bag is made of a material that transmits ultraviolet rays, the covering implement 10 can be sterilized by irradiating it with ultraviolet rays after it is wrapped in the sterilization bag.

### <Steps of Method for Manufacturing Observation Sample Covering Implement>

Next, the steps of the method for manufacturing an observation sample covering implement according to the present invention will be described.

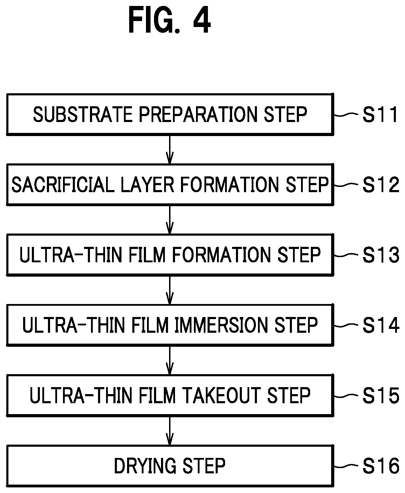

As illustrated in FIG. 4, the covering implement 10 is manufactured by performing substrate preparation step S11, sacrificial layer formation step S12, ultra-thin film formation step S13, ultra-thin film immersion step S14, ultra-thin film takeout step S15, and preferably further drying step S16. Specifically, the substrate preparation step S11 to the ultra-thin film formation step S13 mean the steps of manufacturing the ultra-thin film 1, and the ultra-thin film immersion step S14 to the ultra-thin film takeout step S15, or the ultra-thin film immersion step S14 to the drying step S16 mean the steps of manufacturing the covering implement 10 for sticking the ultra-thin film 1 to the main body section 2.

### (Step of Manufacturing Ultra-Thin Film)

Here, as an example of the manufacturing method of ultra-thin film 1, the steps of manufacturing the ultra-thin film 1 in spin coating will be described, but the manufacturing method is not particularly limited as long as the ultra-thin film 1 can be manufactured. As illustrated in FIG. 5A, in the substrate preparation step S11, a substrate 51 with a smooth surface and a shape similar to that of the ultra-thin film 1, for example, circular in a plan view, is prepared according to a usual manner such as spin coating. The thickness of the substrate 51 can be set appropriately according to the type of the ultra-thin film 1, for example, 10 µm or more and 10000 µm or less. Note that the shape of the substrate 51 can be, for example, square, rectangular, circular, or elliptical, but the shape is not particularly limited as long as it is flat.

Materials for the substrate 51 include, for example, silicon, silicon rubber, silica, glass, mica, graphite and other carbon materials, polyethylene, polypropylene, cellophane, elastomer and other polymer materials, apatite and other calcium compounds, and the like. The preferable material is silicon, and the preferable substrate is silicon wafers.

As illustrated in FIG. 5B, in the sacrificial layer formation step S12, a sacrificial layer 52 is prepared on the substrate 51 according to a usual manner such as spin coating. The thickness of the sacrificial layer 52 is set appropriately according to the type of the ultra-thin film 1, for example, 0.01 µm or more and 10 µm or less.

In the next step, the ultra-thin film 1 is prepared on the sacrificial layer 52 and then immersed in a solvent to dissolve the sacrificial layer 52, so the material of the sacrificial layer 52 is not particularly limited as long as it is soluble in the solvent at that time. For example, if the solvent is an aqueous solvent, the material of sacrificial layer 52 may be a polyelectrolyte such as polyacrylic acid, polymethacrylic acid, or polystyrene sulfonic acid; polyethylene glycol, polyacrylamide, or polyvinyl alcohol; or a non-ionic water-soluble polymer such as a polysaccharide such as starch or cellulose acetate.

As illustrated in FIG. 5C, in the ultra-thin film formation step S13, the ultra-thin film 1 is prepared on sacrificial layer 52 according to a usual manner such as spin coating. The thickness and material of the ultra-thin film 1 are as described above.

### (Step of Manufacturing Covering Implement)

As illustrated in FIG. 5D, in the ultra-thin film immersion step S14, the substrate 51, on which the sacrificial layer 52 and ultra-thin film 1 have been prepared, is immersed in a solvent 53 for only dissolving the sacrificial layer 52, which is contained in a container 54, so that the sacrificial layer 52 is dissolved to only suspend the ultra-thin film 1 in the solvent 53. Note that the substrate 51 settles in the solvent 53 (not shown).

As the solvent, an aqueous solvent or an organic solvent is used. Aqueous solvents include water, distilled water, water having salt dissolved therein, water having a surfactant dissolved therein, buffer solutions, and the like. When the sacrificial layer 52 is polyvinyl alcohol, water and distilled water are preferable.

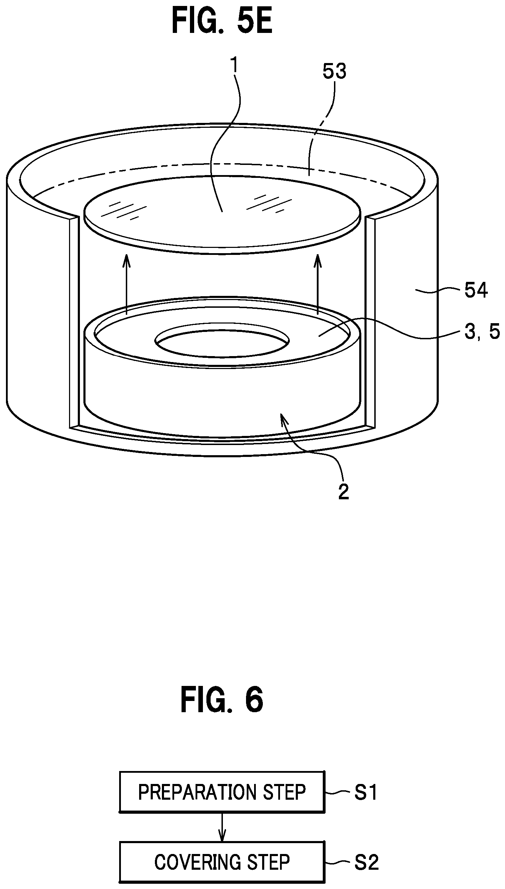

As illustrated in FIG. 5E, in the ultra-thin film takeout step S15, the ultra-thin film 1 suspended (immersed) in the solvent 53 is scooped up by the main body section 2 from the lower side of the ultra-thin film 1, and the ultra-thin film 1 is held on the upper surface of the main body section 2, specifically the upper surface of the holding section 3 (plate section 5). Note that the main body section 2 may be submerged in the solvent 53 beforehand in the ultra-thin film immersion step S14 and then scoop up the ultra-thin film 1, or it may be put in the solvent 53 afterwards in the ultra-thin film takeout step S15 and then scoop up the ultra-thin film 1.

In the drying step S16, the ultra-thin film 1 held on the covering implement 10 is dried according to a usual manner such as natural drying, freeze drying, or vacuum drying. Note that the ultra-thin film 1 held on the main body section 2 may be dried in a desiccator.

### <Method for Covering Observation Sample>

Next, the method for covering an observation sample using the covering implement according to the present invention will be described.

As illustrated in FIG. 6, the covering method includes a preparation process S1 and a covering step S2.

### [First Covering Method]

### (Preparation Step)

As illustrated in FIG. 7A, in the preparation step S1, the covering implement 10 is prepared in a posture in which the ultra-thin film 1 is positioned upward, and the observation sample S is prepared on the worktable 110. Note that with regard to the observation sample S, the biological tissue 101 is placed on the observation substrate 102 along with reagents necessary for observation, culture medium, and the like. The worktable 110 is preferably smaller than the observation substrate 102.

### (Covering Step)

Here, the covering step for an observation sample whose observation substrate is not an ultra-thin film will be described. As illustrated in FIGs. 7A and 7B, in the covering step S2, the covering implement 10 is positioned above the observation sample S, and then the covering implement 10 is moved to the lower side of the observation sample S. As a result, the ultra-thin film 1 held on the body 2 is cut at the peripheral section of the opening section 4, exhibits high adhesiveness specific to nano-thickness at the lower surface 1b of the cut ultra-thin film 1, and sticks by only physical adsorption, such as van der Waals force and electrostatic interaction, without using reactive functional groups or adhesives, covering the observation sample S and thus facilitating easy preparation of an observation specimen. When the observation sample S is the observation substrate 102 on which the biological tissue 101 is placed, the outer peripheral surface of the biological tissue 101 is covered with the lower surface 1b of the ultra-thin film 1, and the upper surface and side surface as well as part of the lower surface of the observation substrate 102 are covered with the lower surface 1b of the ultra-thin film 1.

### [Second Covering Method]

### (Preparation Step)

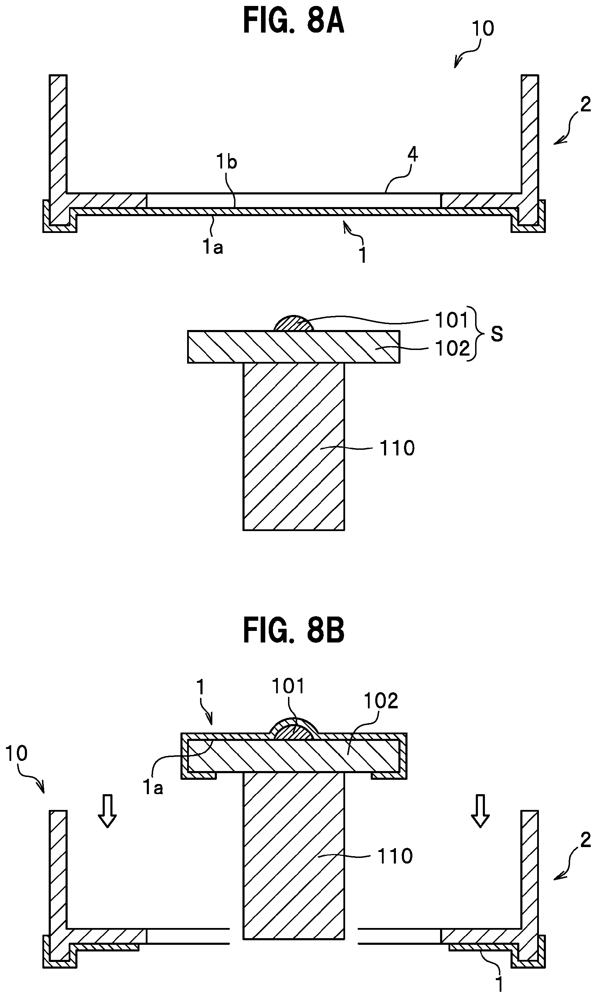

As illustrated in FIG. 8A, the preparation step S1 is the same as the first covering method, except that the covering implement 10 is prepared in a posture in which the ultra-thin film 1 is positioned downward.

### (Covering Step)

As illustrated in FIG. 8B, in the same manner as the first covering method, in the covering step S2, the covering implement 10 is positioned above the observation sample S, and then the covering implement 10 is moved to the lower side of the observation sample S. As a result, the ultra-thin film 1 held on the body 2 is cut at the peripheral section of the opening section 4, exhibits high adhesiveness specific to nano-thickness at the upper surface 1a of the cut ultra-thin film 1, and sticks by only physical adsorption, such as van der Waals force and electrostatic interaction, without using reactive functional groups or adhesives, so that the outer peripheral surface of the biological tissue 101 is covered, and the upper surface and side surface as well as part of the lower surface of the observation substrate 102 are covered with the upper surface 1a of the ultra-thin film 1, making it possible to easily prepare an observation specimen.

### [Third Covering Method]

### (Preparation Step)

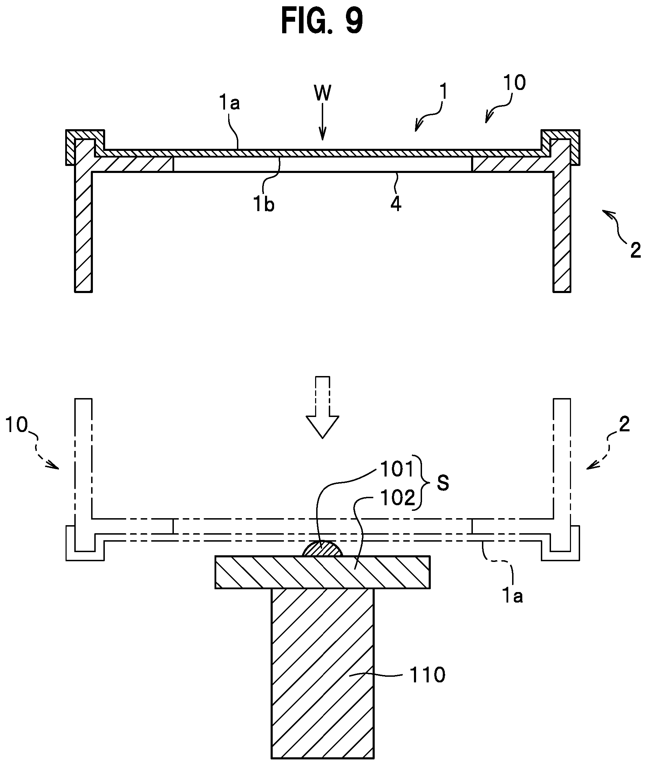

As illustrated in FIG. 9, the preparation step S1 is the same as the first covering method (see FIG. 7A), except that the upper surface 1a of the ultra-thin film 1 is wetted with water W, or culture medium, or the like.

### (Covering Step)

In the covering step S2, the covering implement 10 is reversed in the vertical direction, and the upper surface 1a of the ultra-thin film 1 wetted with water W, culture medium, or the like is brought into contact with the observation sample S. Then, the covering implement 10 is moved to the lower side of the observation sample S. This improves the tightness of covering when the biological tissue 101 and the observation substrate 102 are covered with the ultra-thin film 1. In addition, since drying of the observation sample S can be prevented, the observation time of the biological tissue 101 can be extended.

### [Fourth Covering Method]

### (Preparation Step)

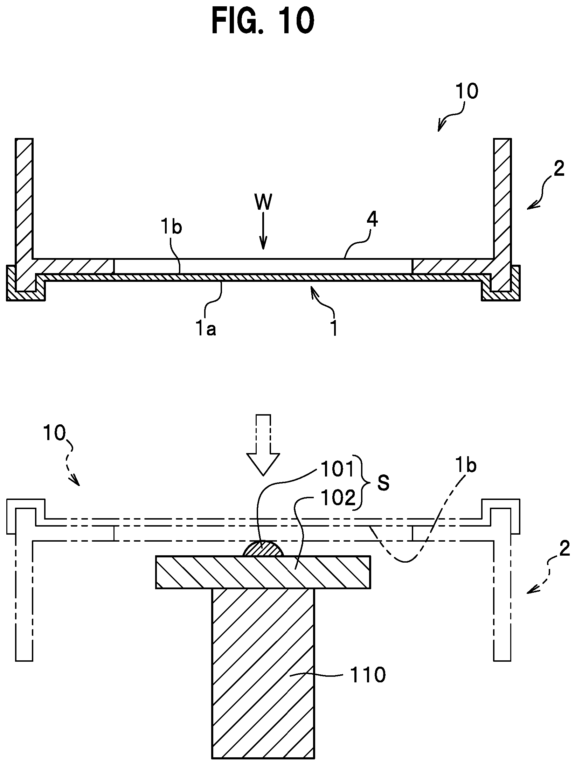

As illustrated in FIG. 10, the preparation step S1 is the same as the second covering method (see FIG. 8A), except that the lower surface 1b of the ultra-thin film 1 is wetted with water W, or culture medium, or the like.

### (Covering Step)

In the covering step S2, the covering implement 10 is reversed in the vertical direction, and the lower surface 1b of the ultra-thin film 1 wetted with water W, culture medium, or the like is brought into contact with the observation sample S. Then, the covering implement 10 is moved to the lower side of the observation sample S. This improves the tightness of covering when the biological tissue 101 and the observation substrate 102 are covered with the ultra-thin film 1. In addition, since drying of the observation sample S can be prevented, the observation time of the biological tissue 101 can be extended.

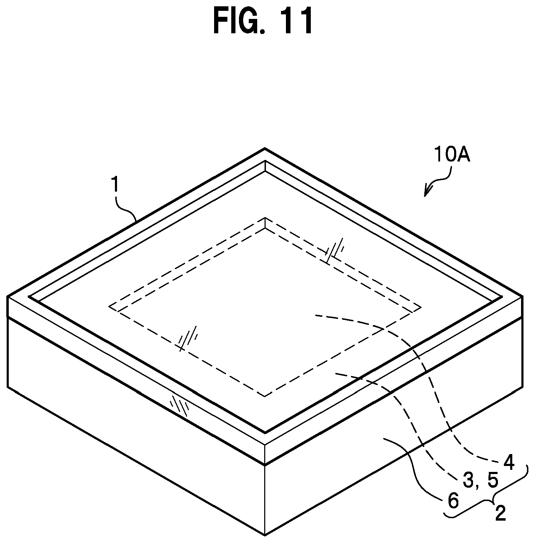

Note that as illustrated in FIG. 11, the covering implement 10A according to the first embodiment of the present invention may have the plate section 5 (holding section 3) and the opening section 4 formed in the plate section 5 as a rectangular shape, preferably a square shape, in a plan view. Note that the aforementioned configuration of the covering implement 10A, other than the shape thereof, is the same as that of the covering implement 10 illustrated in FIG. 1A.

A second embodiment of the present invention will be described with reference to the drawings.

### <Observation Sample Covering Implement>

First, the observation sample covering implement according to the present invention will be described (hereinafter referred to as the covering implement).

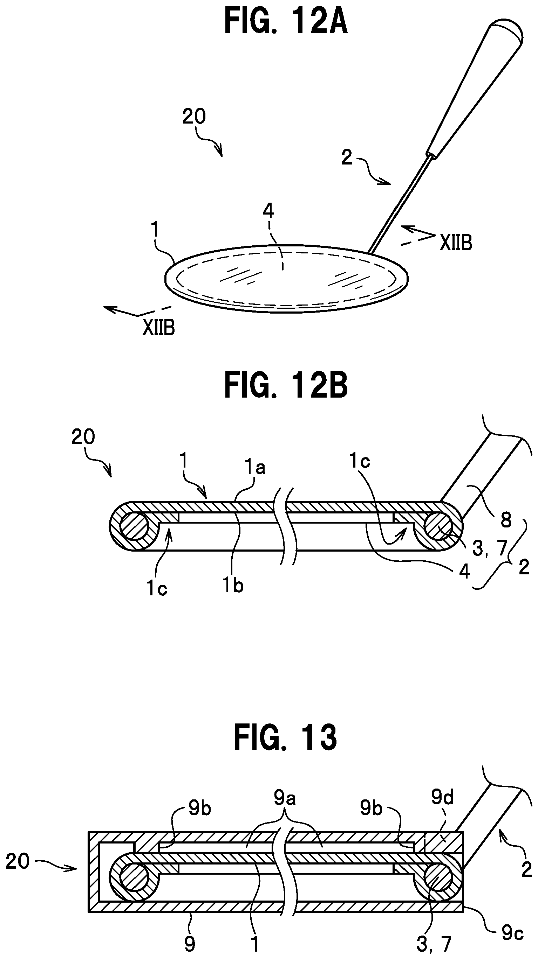

As illustrated in FIGs. 12A and 12B, the covering implement 20 according to the present invention includes an ultra-thin film 1 and a main body section 2. The description of the ultra-thin film 1 is omitted since it is the same as that of the first embodiment.

### (Main Body Section)

The main body section 2 includes a holding section 3 with an opening section 4 formed therein. In addition, it is preferable that the main body section 2 includes a frame section 7 in which the holding section 3 is composed of a wire rod with a circular or elliptical cross-sectional shape, and the wire rod is positioned in a frame shape to form the opening section 4, and a handle section 8 connected to the frame section 7. The frame section 7 holds the ultra-thin film 1.

The shape of the frame 7 (holding section 3) is not particularly limited as long as it can hold the ultra-thin film 1, but a circular or elliptical shape in a plan view is preferable. The outer diameter of the wire rod that constitute the frame section 7 is not particularly limited either, as long as it can hold the ultra-thin film 1, and it is 10 mm or more and 100 mm or less, for example. Note that the wire rod may be a single bunch of wire rods made by twisting multiple wire rods together.

The shape of the opening section 4 formed in the frame section 7 (holding section 3), that is, the opening section 4 formed by positioning wire rods in a frame shape, is not particularly limited, and is preferably circular or elliptical in a plan view. The outer diameter of the opening section 4 is formed larger than the observation sample S so as to cut the ultra-thin film 1 to a size that sufficiently covers the observation sample S, for example, 10 mm or more and 100 mm or less. In addition, the ultra-thin film 1 held on the frame section 7 forms an overlapping section 1c, where the upper surface 1a and lower surface 1b of the ultra-thin film 1 are pasted together and overlap on the inner peripheral side of the frame section 7.

The handle section 8 is a rod-shaped member connected to the frame section 7 and provided by extending upward at a predetermined angle from the frame section 7. The handle section 8 functions as a handle of the frame section 7 when scooping (taking out), from the solvent, the ultra-thin film 1 suspended (immersed) in the solvent using the frame section 7 in the ultra-thin film takeout step S15 described above. In addition, the handle section 8 may also have a bending section (not shown) that bends in the middle of the length direction. Note that the outer diameter and length of the handle section 8 are set appropriately in consideration of the workability of taking out the ultra-thin film 1.

The material of the main body section 2 is preferably made of metal or resin that does not change the properties of the ultra-thin film 1 and is insoluble in the solvent 53 (see FIG. 5D) used in the ultra-thin film immersion step S14 described above, and metals such as aluminum, iron, copper, brass, and stainless steel are further preferable.

As illustrated in FIG. 13, it is preferable that the covering implement 20 further includes a lid section 9 that covers the upper surface side and lower surface side of the holding section 3 (frame section 7). The lid section 9 provided prevents dust, dirt, and the like from adhering to the ultra-thin film 1.

The lid section 9 stores the frame section 7 that holds the ultra-thin film 1 inside, and is configured in a box shape with an open-end surface 9c at one end. In addition, it is preferable that the lid section 9 has a convex 9b that forms a gap 9a between the lid section 9 and the ultra-thin film 1 to prevent the stored ultra-thin film 1 from sticking. Furthermore, it is preferable that the lid section 9 has a notch section 9d for storing the handle section 8 on the open-end surface 9c side. Note that the material of the lid section 9 is preferably the same material as the frame section 7.

### <Covering Implement Package>

The covering implement package includes a covering implement 20 and a packaging bag formed of a resin film that wraps the covering implement 20 from the outside. The covering implement 20 is as described above, and the packaging bag used can be similar to the packaging bag 11 of the first embodiment (see FIG. 3).

### <Method for Covering Observation Sample>

The method for covering an observation sample is the same as in the first embodiment, except that the covering implement 20 is used.

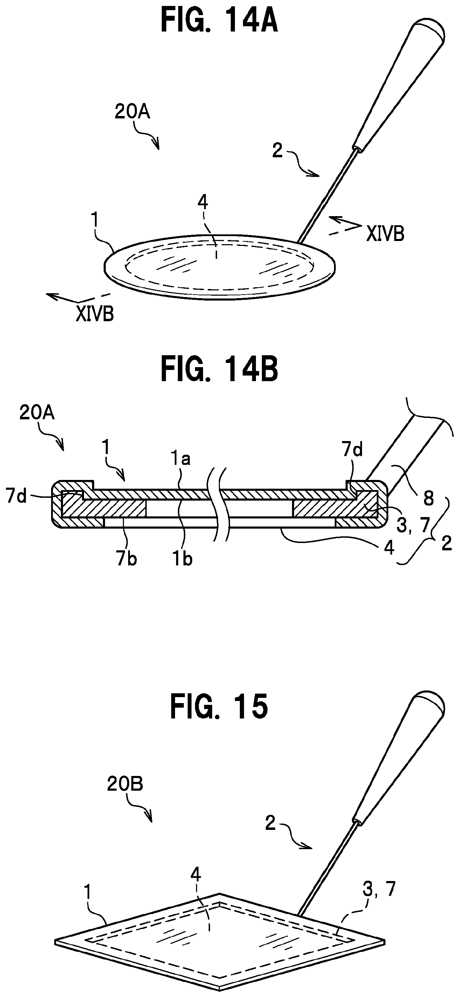

Note that as illustrated in FIGs. 14A and 14B, the covering implement 20A according to the present invention may have the holding section 3 (frame section 7) made of plate material, and the plate material may be positioned in a frame shape to form the opening section 4. In addition, the frame section 7 preferably includes a stepped section 7d on the outer peripheral side, as in the plate section 5 (see FIG. 1B). Here, the width of the plate material is set larger than the outer diameter of the wire rod, for example 11 mm or more and 150 mm or less. Note that other than the aforementioned configuration, this is the same as the covering implement 20 illustrated in FIG. 12A.

If the frame section 7 is configured with a plate material, when the ultra-thin film 1 is held on the frame section 7, less of the ultra-thin film 1 goes around the lower surface 7b of the frame section 7, and therefore, the overlapping section 1c (see FIG. 12B) is not formed, where the upper surface 1a and lower surface 1b of the ultra-thin film 1 stick and overlap on the inner peripheral side of the frame section 7. As a result, when covering the observation sample S with the ultra-thin film 1, the strength of the outer peripheral side of the ultra-thin film 1 does not increase by the overlapping section 1c, and the ultra-thin film 1 is easily cut at the edge section of the opening section 4, facilitating the covering work.

In addition, as illustrated in FIG. 15, the covering implement 20B according to the second embodiment of the present invention may have the frame section 7 (holding section 3) and the opening section 4 formed in the frame section 7 as a rectangular shape, preferably a square shape, in a plan view. Note that other than the aforementioned configuration, this is the same as the covering implement 20 illustrated in FIG. 12A.

### <Other Covering Methods>

In the aforementioned covering methods, the method has been described of preparing an observation specimen by covering an observation sample in which the observation substrate is not an ultra-thin film. When the observation substrate is an ultra-thin film and the biological tissue or the like (observation sample) is sufficiently large, the biological tissue or the like (observation sample) is not placed on the holding material, but the biological tissue or the like (observation sample) is placed on the worktable 110, and the same steps can be used to cover the biological tissue or the like (observation sample) with an ultra-thin film using a covering implement to create an observation specimen. In addition, when the observation substrate is an ultra-thin film and the cell or biological tissue or the like is small, the cell or biological tissue or the like is placed on the holding material to prepare an observation sample, and the same steps can be used to cover the observation sample with an ultra-thin film using a covering implement create an observation specimen. In this way, the cell or biological tissue or the like can be easily observed from the ultra-thin film side.

## Claims

1. An observation sample covering implement (10) comprising:
a main body section (2) that has a holding section (3) with an opening section (4) formed therein;
an ultra-thin film (1) is formed larger than the opening section (4) and
sticks to at least an upper surface (5a) and part of a side surface (5b) of the holding section (3) so as to block the opening section (4), and is held on the holding section (3);
wherein the main body section (2) includes: a plate section (5) in which the holding section (3) is composed of a plate material and a through hole is formed in the plate material to form the opening section (4),
**characterized in that**:
the ultra-thin film (1) sticks to the upper surface (5a) and the part of the side surface (5b) of the holding section (3) by physical adsorption;
the main body section (2) includes a wall section (6) which extends downward from an outer periphery of the plate section (5);
the ultra-thin film (1) is configured to cover a top surface and peripheral side surfaces of an observation sample (S,101,102) disposed on an observation substrate; and
the thickness of the ultra-thin film (1) ranges from 20nm to 200nm; and the ultra-thin film (1) is made of a hydrophobic resin.

2. The observation sample covering implement (10) according to claim 1, wherein
the main body section (2) includes
a frame section (7) in which the holding section (3) is composed of a wire rod, and the wire rod is positioned in a frame shape to form the opening section (4), and
a handle section (8) connected to the frame section (7).

3. The observation sample covering implement (10) according to claim 1 or 2, wherein
the holding section (3) includes a stepped section (5d) that forms a recess (5c) on an upper surface (5a) side where the ultra-thin film (1) is held, and
the stepped section (5d) is formed on an outer peripheral side of the holding section (3) outside the opening section (4), and
the opening section (4) is opened to a bottom surface of the recess (5c).

4. The observation sample covering implement (10) according to any one of claims 1 to 3, wherein
the main body section (2) is made of metal, glass, or resin, and
the main body section (2) is insoluble in one solvent selected from the group consisting of aqueous solvents and organic solvents.

5. The observation sample covering implement (10) according to any one of claims 1 to 4, further comprising at least one of a lid section (9A) that covers an upper surface (5a) side and a receiving section (9B) that covers a lower surface (5e) side of the holding section (3).

6. The observation sample covering implement (10) according to any one of claims 1 to 5, wherein
the opening section (4) is formed larger than the observation sample (S).

7. A covering implement package (30) comprising:
the observation sample covering implement (10) according to any one of claims 1 to 6; and
a packaging bag (11) that wraps the observation sample covering implement (10) from an outside.

8. A method for covering an observation sample (S,101,102), comprising:
preparing the observation sample covering implement (10) according to any one of claims 1 to 7 and an observation sample (S); and
covering the observation sample (S) with the ultra-thin film (1) by placing the observation sample covering implement (10) above the observation sample (S,101,102).

## Patentansprüche

1. Gerät zum Abdecken einer Beobachtungsprobe (10), umfassend:
einen Hauptkörperabschnitt (2), der einen Halteabschnitt (3) mit einem darin gebildeten Öffnungsabschnitt (4) aufweist;
einen ultradünnen Film (1), der größer als der Öffnungsabschnitt (4) gebildet ist und
an mindestens einer oberen Oberfläche (5a) und einem Teil einer seitlichen Oberfläche (5b) des Halteabschnitts (3) anhaftet, um den Öffnungsabschnitt (4) zu blockieren, und an dem Halteabschnitt (3) gehalten wird;
wobei der Hauptkörperabschnitt (2) beinhaltet: einen Plattenabschnitt (5), in dem der Halteabschnitt (3) aus einem Plattenmaterial zusammengesetzt ist und ein Durchgangsloch in dem Plattenmaterial gebildet ist, um den Öffnungsabschnitt (4) zu bilden,
**dadurch gekennzeichnet, dass**:
der ultradünne Film (1) durch physikalische Adsorption an der oberen Oberfläche (5a) und einem Teil der seitlichen Oberfläche (5b) des Halteabschnitts (3) anhaftet;
der Hauptkörperabschnitt (2) einen Wandabschnitt (6) beinhaltet, der sich von einem Außenumfang des Plattenabschnitts (5) nach unten erstreckt;
der ultradünne Film (1) konfiguriert ist, um eine obere Oberfläche und seitliche Umfangsoberflächen einer auf einem Beobachtungssubstrat angeordneten Beobachtungsprobe (S, 101, 102) abzudecken; und
die Dicke des ultradünnen Films (1) von 20 nm bis 200 nm reicht; und der ultradünne Film (1) aus einem hydrophoben Harz hergestellt ist.

2. Gerät zum Abdecken einer Beobachtungsprobe (10) nach Anspruch 1, wobei
der Hauptkörperabschnitt (2) beinhaltet
einen Rahmenabschnitt (7), in dem der Halteabschnitt (3) aus einem Walzdraht zusammengesetzt ist und der Walzdraht in einer Rahmenform positioniert ist, um den Öffnungsabschnitt (4) zu bilden, und
einen mit dem Rahmenabschnitt (7) verbundener Griffabschnitt (8).

3. Gerät zum Abdecken einer Beobachtungsprobe (10) nach Anspruch 1 oder 2, wobei
der Halteabschnitt (3) einen abgestuften Abschnitt (5d) beinhaltet, der auf einer Seite der oberen Oberfläche (5a), wo der ultradünne Film (1) gehalten wird, eine Aussparung (5c) bildet, und
der abgestufte Abschnitt (5d) an einer Außenumfangsseite des Halteabschnitts (3) außerhalb des Öffnungsabschnitts (4) gebildet ist, und
der Öffnungsabschnitt (4) zu einer Bodenoberfläche der Aussparung (5c) hin geöffnet ist.

4. Gerät zum Abdecken einer Beobachtungsprobe (10) nach einem der Ansprüche 1 bis 3, wobei
der Hauptkörperabschnitt (2) aus Metall, Glas oder Harz gefertigt ist, und
der Hauptkörperabschnitt (2) in einem Lösungsmittel, das aus der Gruppe ausgewählt ist, die aus wässrigen Lösungsmitteln und organischen Lösungsmitteln besteht, unlöslich ist.

5. Gerät zum Abdecken einer Beobachtungsprobe (10) nach einem der Ansprüche 1 bis 4, das weiter mindestens einen Deckelabschnitt (9A), der eine Seite der oberen Oberfläche (5a) abdeckt, und einen Aufnahmeabschnitt (9B), der eine Seite einer unteren Oberfläche (5e) des Halteabschnitts (3) abdeckt, umfasst.

6. Gerät zum Abdecken einer Beobachtungsprobe (10) nach einem der Ansprüche 1 bis 5, wobei
der Öffnungsabschnitt (4) größer als die Beobachtungsprobe (S) gebildet ist.

7. Abdeckungsgerätepaket (30), umfassend:
ein Gerät zum Abdecken einer Beobachtungsprobe (10) nach einem der Ansprüche 1 bis 6; und
einen Verpackungsbeutel (11), der das Gerät zum Abdecken einer Beobachtungsprobe (10) von einer Außenseite umhüllt.

8. Verfahren zum Abdecken einer Beobachtungsprobe (S, 101, 102), umfassend:
Vorbereiten des Gerätes zum Abdecken einer Beobachtungsprobe (10) nach einem der Ansprüche 1 bis 7 und einer Beobachtungsprobe (S); und
Abdecken der Beobachtungsprobe (S) mit dem ultradünnen Film (1) durch Platzieren des Gerätes zum Abdecken einer Beobachtungsprobe (10) über der Beobachtungsprobe (S, 101, 102).

## Revendications

1. Outil de recouvrement (10) d'échantillon d'observation comprenant :
une section de corps principal (2) qui présente une section de maintien (3) avec une section d'ouverture (4) formée dans celle-ci ;
un film ultramince (1) est formé plus grand que la section d'ouverture (4) et
adhère à au moins une surface supérieure (5a) et à une partie d'une surface latérale (5b) de la section de maintien (3) de manière à bloquer la section d'ouverture (4), et est maintenu sur la section de maintien (3) ;
dans lequel la section de corps principal (2) inclut : une section de plaque (5) dans laquelle la section de maintien (3) est composée d'un matériau de plaque et un trou traversant est formé dans le matériau de plaque pour former la section d'ouverture (4),
**caractérisé en ce que** :
le film ultramince (1) adhère à la surface supérieure (5a) et à la partie de la surface latérale (5b) de la section de maintien (3) par adsorption physique ;
la section de corps principal (2) inclut une section de paroi (6) qui s'étend vers le bas à partir d'une périphérie extérieure de la section de plaque (5) ;
le film ultramince (1) est configuré pour recouvrir une surface de dessus et des surfaces latérales périphériques d'un échantillon d'observation (S, 101, 102) disposé sur un substrat d'observation ; et
l'épaisseur du film ultramince (1) varie de 20 nm à 200 nm ; et le film ultramince (1) est constitué de résine hydrophobe.

2. Outil de recouvrement (10) d'échantillon d'observation selon la revendication 1, dans lequel
la section de corps principal (2) inclut
une section de cadre (7) dans laquelle la section de maintien (3) est composée d'un fil machine, et le fil machine est positionné en forme de cadre pour former la section d'ouverture (4), et
une section de manche (8) reliée à la section de cadre (7).

3. Outil de recouvrement (10) d'échantillon d'observation selon la revendication 1 ou 2, dans lequel
la section de maintien (3) inclut une section étagée (5d) qui forme un creux (5c) sur un côté de surface supérieure (5a) où le film ultramince (1) est maintenu, et
la section étagée (5d) est formée sur un côté périphérique extérieur de la section de maintien (3) à l'extérieur de la section d'ouverture (4), et
la section d'ouverture (4) est ouverte sur une surface de fond du creux (5c).

4. Outil de recouvrement (10) d'échantillon d'observation selon l'une quelconque des revendications 1 à 3, dans lequel
la section de corps principal (2) est constituée de métal, de verre ou de résine, et
la section de corps principal (2) est insoluble dans un solvant sélectionné dans le groupe consistant en des solvants aqueux et des solvants organiques.

5. Outil de recouvrement (10) d'échantillon d'observation selon l'une quelconque des revendications 1 à 4, comprenant en outre au moins une d'une section de couvercle (9A) qui recouvre un côté de surface supérieure (5a) et d'une section de réception (9B) qui recouvre un côté de surface inférieure (5e) de la section de maintien (3).

6. Outil de recouvrement (10) d'échantillon d'observation selon l'une quelconque des revendications 1 à 5, dans lequel
la section d'ouverture (4) est formée plus grande que l'échantillon d'observation (S).

7. Conditionnement (30) d'outil de recouvrement comprenant :
l'outil de recouvrement (10) d'échantillon d'observation selon l'une quelconque des revendications 1 à 6 ; et
un sac de conditionnement (11) qui enveloppe l'instrument de recouvrement (10) d'échantillon d'observation d'un extérieur.

8. Procédé de recouvrement d'un échantillon d'observation (S, 101, 102), comprenant :
la préparation de l'instrument de recouvrement (10) d'échantillon d'observation selon l'une quelconque des revendications 1 à 7 et d'un échantillon d'observation (S) ; et
le recouvrement de l'échantillon d'observation (S) avec le film ultramince (1) en plaçant l'outil de recouvrement (10) d'échantillon d'observation au-dessus de l'échantillon d'observation (S, 101, 102).
